# EUROPEAN PATENT SPECIFICATION

(11) **EP 0 328 014 B1**
(45) Date of publication and mention of the grant of the patent: **20.03.1996**
(21) Application number: 89101982.0
(22) Date of filing: 04.02.1989
(51) Int. Cl.: C08J 5/00, C08G 61/08, B29C 67/24

(54) **Reaction injection molded article, machined product thereof and process for its preparation**
Reaktionsspritzgussteil, bearbeitetes Produkt und Verfahren zu seiner Herstellung
Article formé par moulage réactif par injection, produit ainsi façonné et procédé pour sa fabrication

(30) Priority: 09.02.1988 JP 28399/88; 11.07.1988 JP 172296/88
(43) Date of publication of application: 16.08.1989
(73) Proprietor: NIPPON ZEON KABUSHIKI KAISHA, Chiyoda-ku Tokyo (JP)
(72) Inventor: Suzuku, Shoji, Yokohama-shi Kanagawa-ken (JP)
(74) Representative: von Kreisler, Alek, Dipl.-Chem.

(56) References cited:
- EP-A- 0 253 301
- GB-A- 1 332 438
- DATABASE WPIL, accession no. 87-194498 [28], Derwent Publications Ltd, London, GB; & JP-A-62 122 718

## Description

### Background of Invention

Engineering plastics such as a polyacetal resin, super-high-molecular weight polyethylene, polybutylene terephthalate and a polycarbonate resin have been used as various machine parts.

However, since these engineering plastics are thermoplastic resins, they have problems in that machinability is poor. More specifically, the temperature is elevated to a level close to the melting point by friction heat generated at the machining step so that the material to be machined is softened and a smooth surface is difficult to obtain. Furthermore, the machined surface of the prior art resins must be cooled at the machining step to keep it from overheating.

Where a molded article is prepared from a thermosetting resin, such as an unsaturated polyester resin, a long fibrous reinforcing material is often incorporated to improve the mechanical strength of the molded article. In such a case, molding is accomplished by the hand lay-up method according to the conventional technique and the molding operation is complicated.

As a means for overcoming these disadvantages, it was previously proposed to mold an article or a stock to be machined composed of a ring-opened polymer of a norbornene monomer having a tricyclic or higher cyclic structure obtained by reaction injection molding (RIM), see Japanese Patent Application No. 62-232542 and Japanese Patent Application No. 62-269986.

JP-A-62 122 718 discloses a norbornene layer sandwiched between two panels.

GB-A-1 332 438 discloses that the core material is the same or substantially the same material as the outer mold material.

It now has been found that this RIM article composed of the ring-opened polymer of the norbornene monomer and the process for its preparation has the following four disadvantages. First, the RIM article composed of the ring-opened polymer of the norbornene monomer generally has a peculiar smell, and where the molded article is processed into a product which human hands touch, handlers thereof often become nervous about this smell. Second, conventional RIM is ordinarily carried out by using a metal mold and since this metal mold is readily contaminated or corroded, the mold must be washed before each molding operation, which is troublesome. Third, in the conventional preparation process, since the ring-opened polymer of the norbornene monomer shrinks during the polymerization, it is apprehended that a sink mark will be formed on the molded article. Fourth, to obtain a RIM article having a complicated shape according to the conventional method, it is necessary to prepare a mold having a complicated shape, and therefore, the manufacturing cost is increased and a molded article having a special shape cannot be obtained. For example, it is very difficult to obtain a molded article having a spiral shape.

### Objects of Invention

It is the primary object of the present invention to overcome all of the above-mentioned disadvantages and provide a RIM article or a machined product thereof which has excellent mechanical strength and machinability and in which the inherent smell of a ring-opened polymer of a norbornene monomer is substantially eliminated.

A secondary object of the present invention is to provide an injection molded article functioning as a spiral spring in which the spring constant can be changed within a broad range and which is light in weight, cheap, and has a reduced noise generating property.

A third object of the present invention is to provide an injection molded article which can maintain a predetermined shape, has an excellent sealing property, and which can be used as a sealing material which can be easily manufactured at a low cost.

A fourth object of the present invention is to provide a machined product of a ring-opened polymer of a norbornene monomer having a tricyclic or higher cyclic structure which is suitably used as a light and cheap roller, for example, a platen roller for a printer.

A fifth object of the present invention is to provide a process for the preparation of a RIM article composed of a ring-opened polymer of a norbornene monomer having a tricyclic or higher cyclic structure in which corrosion or contamination of a mold does not occur; the mold need not be washed; and even in the case of a complicated shape, a molded article having a substantially precise shape and low cost can be easily obtained without formation of a sink mark.

### Summary of Invention

The present invention relates to an integrally molded polymeric article comprising a polymeric core which is covered by a polymeric outer layer wherein said polymeric core comprises a ring-opened polymer derived from the metathesis bulk polymerization of a norbornene monomer having a tricyclic or higher cyclic structure and wherein said norbornene monomer is polymerized within and in contact with the inner surface of said outer layer polymer and said outer layer polymer is different from the core polymer and is selected from crosslinked polymers of elastomers, thermoplastic elastomers, thermoplastic resins, thermosetting resins, and mixtures thereof.

The higher cyclic structure includes four cyclic or ring structures and higher.

The present invention further relates to a process for preparing the integrally molded polymeric article comprising a polymeric core covered by a polymeric outer layer comprising the steps of: providing a mold comprising said polymeric outer layer; conveying a reaction solution comprising a norbornene monomer having a tricyclic or higher cyclic structure, a metathesis catalyst, and a metathesis cocatalyst into said mold; and polymerizing said norbornene monomer in contact with the inner surface of said mold.

### Reference to Drawings

The principal embodiments of the present invention are illustrated in the accompanying drawings where Fig. 1 is a perspective view showing a RIM article according to one embodiment of the present invention. Fig. 2 is a front view illustrating an embodiment of the process for preparing this molded article. Figs. 3 and 4 are perspective views illustrating RIM articles of various shapes which form embodiments of the present invention. Fig. 5 is a perspective view of a machined product of a RIM article showing machined ends of a roller product which is another embodiment of the present invention. Fig. 6 is a perspective view illustrating a RIM article showing a spiral ring which is still another embodiment of the present invention. Fig. 7 is a sectional view illustrating a RIM article showing a scaling element between a pair of abutting members which is still another embodiment of the present invention.

### Detailed Description of Invention

The advantages of such an article and process for its preparation are many.

Since the outer layer covers all of the outer surface of the core composed of the ring-opened polymer of the norbornene monomer, the inherent smell of the polymer is drastically reduced.

The RIM article is characterized in that a starting reaction liquid containing a norbornene monomer having a tricyclic or higher cyclic structure is subjected to ring-opening polymerization within an outer layer having a spiral shape.

In the thus-obtained RIM article, by changing the kind and thickness of the material constituting the outer layer and the composition and formulation of the ring-opened polymer constituting the core or the inner layer, the spring constant of the obtained spiral spring can be freely varied within a broad range.

Since the core is composed of the ring-opened polymer of the norbornene monomer in this spiral spring, the weight can be reduced a great deal as compared with a conventional metal spiral spring. Furthermore, since a polymeric material is used for the outer layer, the production can be performed much more easily than in the conventional preparation process in which a metal rod is processed into a spiral shape. Moreover, when the spiral spring of the present invention is compressed, the outer layers of the polymeric material are brought into contact with each other and the noise can be reduced as compared with the conventional spiral spring in which metal wires are brought into contact with each other. Also, where a flexible polymeric material, such as a rubber, is used for the outer layer, the outer layer acts as the abutment which is required in the conventional technique of the manufacture of spiral springs. Accordingly, the abutment becomes unnecessary pursuant to the invention herein and the number of parts can be reduced.

Since the outer layer of the RIM article of the present invention is formed of a flexible polymeric material, such as a rubber, the cross-sectional shape of the molded article can be made circular, rectangular, or another desired shape. Also, the molded article can be used as a sealing material for preventing leakage or entry of a fluid between adjacent parts.

Since herein the core composed of the ring-opened polymer is integrally formed in the interior of the sealing material in advance and since the sealing material retains a predetermined shape, the sealing material is easy to handle and the sealing material does not protrude from a groove or clearance wherein the sealing material is attached. A more complete sealing can thus be attained even in the case of a high-pressure fluid. Moreover, when this sealing material is prepared, it is not necessary to attach or adhere the outer layer to the core in an independent additional step and the production can thus be facilitated.

In the manufacture of a roller, both ends of the bar-shaped molded article according to the present invention are machined to form rotation shafts on both end portions of the core and the machined product is used as a roller in equipment.

Since the ring-opened polymer of the norbornene monomer having a tricyclic or higher cyclic structure has excellent machinability, rotation shafts can be easily formed and it is possible to obtain high precision comparable to the precision attainable in the case of a metallic core. Furthermore, since the weight of the machined product is much lighter than the product obtained according to the conventional method, since there is no risk or corrosion observed as in a metallic core, and since the preparation process can be shortened, the productivity is improved and the cost is reduced.

The present invention also provides a process characterized in that a starting reaction liquid containing a norbornene monomer having a tricyclic or higher cyclic structure is fed into an outer layer composed of a polymeric material and the starting reaction liquid is subjected to ring-opening polymerization within the outer layer. Since the outer layer is used as the mold and this outer layer is positively utilized as a constituent element of the molded article, a molded article having a complicated shape can be prepared at a low cost while maintaining substantially the predetermined shape at high accuracy, and the operations of removing the mold and washing the mold become unnecessary. Moreover, in this process, if the starting reaction liquid is fed in the state where the outer layer is expanded to an extent compensating for the shrinkage occurring during the ring-opening polymerization reaction, no vacant space is formed between the outer layer and the core. Finally, since the polymeric material is used as the mold, corrosion or contamination of the mold observed in the conventional method can be avoided.

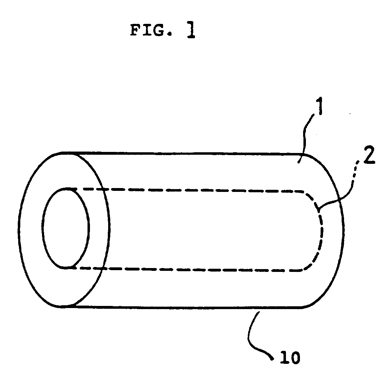

As shown in Fig. 1, RIM article 10 of the present invention generally comprises an outer layer 1 composed of a non-ring-opened polymeric material and a core or inner layer 2 composed of a ring-opened polymer obtained by subjecting a starting reaction liquid containing a norbornene monomer having a tricyclic or higher cyclic structure to ring-opening polymerization within the outer layer 1. Thickness of the outer layer can vary from 1 to 80% of the cross-sectional dimension of the article, preferably 5 to 60%, especially 10 to 50%. Thickness of the inner layer can vary from 99 to 10%, preferably 95 to 40%, and especially 90 to 50%. Thus, the article can have a solid core therein or it can be hollow whereby a fluid can pass therethrough.

In the embodiment shown in Fig. 1, the outer layer 1 has a cylindrical shape. Accordingly, the core layer 2 can have a columnar shape or it can form a surface of a variable thickness on the inside of the outer layer.

Any polymer capable of retaining a predetermined shape during the polymerization of the norbornene monomer can be used as the polymeric material for the outer layer. For example, there can be mentioned crosslinked polymers of elastomers such as natural rubber, polybutadiene rubber, styrene/butadiene rubber, acrylonitrile/butadiene rubber, hydrogenated acrylonitrile/butadiene rubber, chloroprene rubber, ethylene/propylene rubber, ethylene/butene-1-rubber, ethylene/propylene/diene terpolymer rubber, acrylic rubber, epichlorohydrin rubber, and chlorosulfonated polyethylene;
thermoplastic elastomers such as styrene/butadiene block copolymer, styrene/isoprene block copolymer, styrene/isoprene/styrene block copolymer, styrene/isoprene/styrene/isoprene/styrene block copolymer, hydrogenated products of these block copolymers, a mixture of partially crosslinked ethylene/propylene rubber and polyethylene, and a mixture of partially crosslinked ethylene/propylene rubber or ethylene/propylene/diene terpolymer rubber and polyethylene or polypropylene; thermoplastic resins such as polyethylene, polypropylene, polyvinyl chloride, polystyrene, ABS resin, ethylene/vinyl acetate copolymer, polyurethane, chlorinated polyethylene, crosslinked polyethylene, polyethylene terephthalate and nylon 6; and thermosetting resins such as epoxy resin, phenolic resin, urea resin and silicone resin. These polymeric materials may be used as a mixture composed of, for example, an elastomer and another elastomer, or a thermoplastic resin and another thermoplastic resin, or an elastomer and a thermoplastic resin. A typical example of the mixture is a mixture of a thermoplastic elastomer and a thermoplastic hydrocarbon resin such as polyethylene, polypropylene or polystyrene.

In the present invention, since the polymeric material can be used as the mold, preferably a polymeric material is used in which deformation of the mold does not occur, that is, a polymeric material that is soluble or only slightly soluble in the norbornene monomer and capable of resisting heat generated at the polymerization step. From this viewpoint, use of a ring-opened polymer as an inner layer having heat resistance (heat distortion) higher than 100°C, especially higher than 150°C, is recommended. To improve moldability of the outer layer per se and to obtain a molded article having no vacant space between the outer layer and the core, a polymeric material having flexibility, that is, a polymeric material having expandability such that when the starting reaction liquid is fed into the outer layer, the polymer is expanded by at least about 1% by volume, is used. From this viewpoint, use of a crosslinked polymer of an elastomer, a thermoplastic elastomer or a soft thermoplastic resin is recommended as the outer layer.

From the viewpoint of adherence to the core, use of a polyolefin such as polyethylene or polypropylene, with the above-listed thermoplastic elastomers and mixtures thereof, is recommended.

The outer layer may contain an additive such as carbon black or glass fiber.

The outer layer may have a circular shape or a square shape, so far as the outer layer can function as the mold, and the outer surface of the outer shape may be smooth or uneven.

The monomer used as the starting material of the core 2 is a norbornene monomer having a tricyclic or higher cyclic structure. By higher cyclic structure is meant four, five, six or more cyclic or ring structures in the monomer. Because of a tricyclic or higher cyclic structure, a polymer having high heat distortion temperature and high heat resistance required for machining is obtained.

In the present invention, the polymer constituting the core 2 is preferably thermosetting. For this purpose, a crosslinking monomer is used in an amount of at least 10% by weight, preferably at least 30% by weight, based on the total monomers. In the case of a thermosetting polymer, softening by the friction heat at the machining step can be prevented and the machinability can be thus improved.

As the norbornene monomer having a tricyclic or higher cyclic norbornene monomer, there can be mentioned tricyclic monomers such as dicyclopentadiene and dihydrodicyclopentadiene, tetracyclic monomers such as tetracyclododecene, pentacyclic monomers such as tricyclopentadiene, hexacyclic monomers and heptacyclic monomers such as tetracyclopentadiene. Of course, the following are also included herein: C₁₋₁₂ alkyl substitution products of these monomers such as methyl, ethyl, propyl or butyl substitution products thereof; C₂₋₄ alkylidene substitution products such as an ethylidene substitution product; C₆₋₁₆ aryl substituted products such as phenyl or tolyl substituted products; and substituted products having a polar group such as ester, nitrile, ether or halogen. Of these, in view of availability, reactivity, and thermal resistance, tricyclic, tetracyclic or pentacyclic monomers are preferred.

The crosslinking monomer is a polycyclic norbornene monomer having at least two reactive double bonds. for example, there can be mentioned dicyclopentadiene, tricyclopentadiene and tetracyclopentadiene. If the crosslinking monomer is the same as the norbornene monomer, any other crosslinking monomer need not be particularly used.

These norbornene monomers can be used singly or in the form of a mixture of two or more thereof.

Preferably the core comprises polymer of dicyclopentadiene and trimers of cyclopentadiene.

The norbornene monomer having a tricyclic or higher cyclic structure can be obtained by heat-treating dicyclopentadiene. As the heat treatment method, there can be mentioned a method in which dicyclopentadiene is heated at a temperature of 120 to 250°C in an inert gas atmosphere for 0.5 to 20 hours. By this heat treatment, a monomer mixture comprising pentacyclopentadecadiene and the unreacted dicyclopentadiene is obtained.

In the present invention, a bicyclic norbornene monomer that can be polymerized by ring-opening, can be used as a comonomer together with at least one of the above-mentioned norbornene monomers having a tricyclic or higher cyclic structure, so far as attainment of the objectives of the present invention are not hindered. Examples of such norbornene comonomers include 2-norbornene,
5-methyl-2-norbornene, 5-ethylidene-2-norbornene,
5-phenylnorbornene, or a monocyclic cyclo-olefin such as cyclobutene, cyclopentene, cyclopentadiene,
cyclo-octene or cyclododecene,

In the present invention, any known methathesis catalyst for ring-opening polymerization of norbornene monomers can be used without any limitation, see, for example, Japanese Unexamined Patent Publications No. 58-127728, No. 58-129013, No. 58-51911, No. 60-79035, No. 60-186511 and No. 61-12615.

As the methathesis catalyst, there can be mentioned halides, oxyhalides, oxides and organic ammonium salts of tungsten, molybdenum and tantalum. Alkyl aluminum halides, alkoxyalkyl aluminum halides, aryloxyalkyl aluminum halides and organic tin compounds can be used as the activator or cocatalyst.

The methathesis catalyst is used in an amount of 0.01 to 50 millimoles, preferably 0.1 to 10 millimoles, per mole of the monomer. The activator or cocatalyst is used preferably at a molar ratio of from 2 to 10 to the catalyst component.

Preferably, both the methathesis catalyst and cocatalyst are dissolved in the monomer. However, the catalyst and the cocatalyst can be used in suspension or dissolved in a small amount of a solvent, so far as the properties of the product are not substantially degraded.

An antioxidant may be incorporated in the starting reaction liquid containing a norbornene monomer having a tricyclic or higher cyclic structure. As the antioxidant that can be used in the present invention, there can be mentioned a phenol type antioxidant, a phosphorus type antioxidant, an amine type antioxidant, and other various antioxidants for plastics and rubbers. These antioxidants can be used singly or in the form of a mixture of two or more thereof.

The antioxidant is incorporated in an amount such that the ignition point of the norbornene polymer is at least 120°C, preferably at least 130°C. Namely, the antioxidant is incorporated in an amount of at least 0.5% by weight, preferably 1 to 3% by weight, based on the norbornene polymer. If the amount of the antioxidant is too small, it is impossible to elevate the ignition point of the molded article to the desired extent. The upper limit of the amount of the antioxidant is not critical, but too large an amount incorporated of the antioxidant is not preferred from the economical viewpoint and results in inhibition of polymerization. Especially, it has been found that if an amine type antioxidant is used in an amount greater than 2% by weight, the polymerization reaction is inhibited. It is, therefore, preferred that an amine type antioxidant be used in an mount of 0.5 to 2% by weight.

As the phenol type antioxidant, there can be mentioned, for example, 4,4-dioxydiphenyl,
hydroquinone monobenzyl ether,
2,4-dimethyl-6-t-butylphenol, 2,6-t-butylphenol,
2,6-diamylhydroquinone, 2,6-di-t-butyl-p-cresol,
4-hydroxymethyl-2,6-di-t-butylphenol,
4,4'-methylene-bis-(6-t-butyl-o-cresol), butylated
hydroxyanisole, phenol condensate, butylated phenol,
dialkyl phenol sulfide, high-molecular-weight polyvalent phenol, and bisphenol.

As the phosphorus type antioxidant, there can be mentioned, for example, aryl and alkylaryl phosphites such as tri(phenyl) phosphite and tri(nonylphenyl) phosphite.

As the amine type antioxidant, there can be mentioned, for example, phenyl-α-naphthylamine, 4,4'-dioctyldiphenylamine, N,N'-di-β-naphthyl-p-phenylenediamine, N,N'-diphenyl-p-phenylenediamine, N-phenyl-N'-cyclohexyl-p-phenylenediamine, N,N'-di-o-tolyl-ethylenediamine and alkylated diphenylamine.

Various commercially available antioxidant products can be used as well as the above-mentioned antioxidants. A reactive antioxidant may be used which is copolymerizable with monomers such as those disclosed in Japanese Unexamined Patent Publication No. 57-83522 such as, for example, a norbornenyl phenol compound such as 5-(3,5-di-t-butyl-4-hydroxybenzyl)-2-norbornene.

For incorporating the antioxidant into the norbornene monomer, there is ordinarily adopted a method in which the antioxidant is incorporated into the starting reaction liquid containing the norbornene monomer under the polymerization conditions adopted for the RIM method described hereinafter.

The characteristics of the core 2 can be modified by incorporation of various additives such as a filler, a pigment, a colorant, an elastomer and a dicyclopentadiene type heat-polymerized resin. The additives are incorporated in one or both of the reaction solutions.

As a filler, there can be used inorganic fillers such as pulverized glass fiber, carbon black, talc, calcium carbonate and mica.

As the elastomer, there can be mentioned natural rubbers, polybutadiene, polyisoprene, a styrene/butadiene copolymer (SBR), a styrene/butadiene/styrene block copolymer (SBS), a styrene/isoprene/styrene block copolymer (SIS), an ethylene/propylene/diene terpolymer (EPDM), an ethylene/vinyl acetate copolymer (EVA) and hydrogenated products thereof.

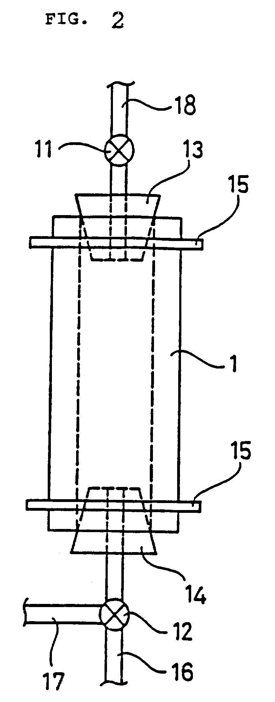

The process for the preparation of the RIM articles according to the present invention will now be described with reference to an embodiment illustrated in Fig. 2.

As shown in Fig. 2, outer layer 1 composed of a hollow polymeric material preferably having flexibility, such as a rubber, is used as the mold, and rubber plugs 13 and 14 provided with valves 11 and 12 are attached to openings on both ends of the outer layer 1 by clamping members 15. One valve 12 is a three-way valve and is connected to a starting reaction liquid feed pipe 16 and an inert gas feed pipe 17. The other valve 11 is connected to extrusion pipe 18 so that a gas or the like in the interior of outer layer 1 is substantially discharged.

At first, valve 11 is opened and simultaneously, the interior of outer layer 1 is connected to the inert gas feed pipe 17 through the three-way valve 12 to replace the atmosphere in the outer layer with an inert gas, such as nitrogen. The outer layer is heated at a predetermined temperature, for example, 50 to 150°C, and the starting reaction liquid containing the norbornene monomer, prepared in advance, is fed into outer layer 1 through the feed pipe 16 by opening the three-way valve. Preferably, the outer layer is cooled by appropriate means, such as air cooling or water cooling, so that the temperature of the outer layer is maintained at an appropriate level.

Where outer layer 1 has a flexibility, it is preferably expanded by 1 to 3% by volume by filling the starting reaction liquid in the interior of the outer layer 1. Of course, the outer layer may be expanded to a higher extent, if necessary. Since the core is shrunk during the polymerization reaction of the starting reaction liquid, the outer layer 1 is shrunk according to this shrinkage of the core layer, with the result that a predetermined size can be maintained and no vacant space is formed between the core 2 and the outer layer 1.

Supply of the starting reaction liquid is ordinarily accomplished according to a method in which the norbornene monomer is charged into two different vessels, a methathesis catalyst is added to one vessel, and an activator or cocatalyst is added to the other vessel. Two stable reaction solutions are thus prepared. The two reaction solutions are mixed and the formed starting reaction liquid is fed into the outer layer 1 through the starting reaction liquid feed pipe 16. Of course, three or more of reaction solutions may be prepared according to need. In general, feeding of the starting reaction liquid is promptly performed just after mixing of the two solutions. Where the starting reaction liquid has a long pot life, the starting reaction liquid may be cast while castable viscosity is maintained. In this sense, the reaction injection molding (RIM) of the present invention includes cast molding.

To improve adherence between the outer layer 1 and the core 2, an adhesive layer composed of a thermosetting type adhesive is preferably applied to the inner surface of the outer layer 1 before the step of feeding the starting reaction liquid is started.

Any adhesive that can be rendered solvent-insoluble by crosslinking can be used as the thermosetting adhesive. For example, there can be mentioned a phenol type adhesive (inclusive of a resorcinol type adhesive), a urea type adhesive, a melamine type adhesive, a furan type adhesive, an epoxy type adhesive, an unsaturated polyester type adhesive, an isocyanate type adhesive, an acrylate type adhesive, a silicone type adhesive, and an acrylic diester type adhesive. Among these adhesives, the phenol type adhesive is preferred. The adhesive layer can be formed according to customary procedures. However, where the adhesive contains a solvent, after coating of the adhesive, the solvent must be removed and the adhesive must be crosslinked at least partially to form an adhesive layer. The adhesive layer need not always be formed on the entire inner surface and it may be formed only on a desired part.

Where a non-crosslinking adhesive such as a thermoplastic adhesive or a synthetic rubber type adhesive is used instead of the thermosetting type adhesive, when the norbornene monomer is cast, the adhesive is dissolved in the monomer and thus the adhesive does not function effectively.

Where a strong adhesion is not required between the outer layer and the core in the molded article, or where the outer layer is composed of a material having an excellent adhesion to the core, formation of the adhesive layer is not necessary.

As materials exhibiting good adhesion to the core made from a monomer having no polar group, there can be mentioned thermoplastic hydrocarbon resins such as polyethylene, polypropylene, and polystyrene; thermoplastic elastomers such as styrene/isoprene/styrene block copolymer, styrene/butadiene/styrene block copolymer, a mixture of partially crosslinked ethylene/propylene/diene terpolymer and polypropylene, and a mixture of a thermoplastic elastomer and a thermoplastic hydrocarbon resin.

In the present invention, fibrous reinforcement may be arranged in the interior of the outer layer 1 in a manner such that the fibrous reinforcement extends in the longitudinal direction before the step of feeding the starting reaction liquid into the outer layer 1 is started. In this case, the mechanical strength of the formed core layer 2 can be further improved. Known fibrous materials of this type, such as glass fiber, carbon fiber, nylon fiber, and aramide fiber, can be used.

When the starting reaction liquid is fed into what later becomes the inner layer, the norbornene monomer contained in the starting reaction liquid is cured inside the outer layer 1 by bulk polymerization and thus the core 2 composed of the ring-opened polymer of the norbornene monomer is formed in the outer layer 1 integrally therewith in the state adhering closely thereto. An example of such a prepared RIM article is shown in Fig. 1. It is sufficient if the polymerization is substantially bulk polymerized. A small amount of an inert solvent used for the preparation of the methathesis catalyst may be present in the polymerization system.

In the RIM article of the present invention, since the outer side of the core 2 is covered with the outer layer 1, the inherent smell of the polymer in the core is not felt.

In the molded article 10, since the polymer constituting the core 2 has an excellent mechanical strength and machinability though the weight is light and since the outer layer 1 is integrally formed on the core layer 2, the molded article as a whole has light weight and has excellent mechanical strength, machinability, impact resistance and corrosion resistance, and therefore, the molded article can be advantageously used for various machine parts, construction members, joints, and the like.

As specific examples of the construction members for which the reactive injection molded article of the present invention can be used, there can be mentioned a pole of a temporary tent, a pole for a truck hood, a pole for a golf-exercising net, a handrail, and a fence. Where the outer layer 1 is composed of a flexible material such as a rubber, the surface of the molded article is soft, is not slippery, and feels warm, the molded article can be advantageously used for handrails and the like.

According to the preparation process of the present invention, since the enclosed outer layer 1 is used as the mold and is utilized as a constituent member of the molded article, even a complicated shape can be obtained easily and precisely. If the starting reaction liquid is fed in the state where the outer layer 1 is expanded to a predetermined extent while allowing the shrinkage by the polymerization reaction, no vacant space is formed between the outer layer and the core and the adhesion between the enclosed core 2 and the outer layer 1 is improved. Moreover, since the polymeric material is used as the mold, contamination or corrosion of the mold does not occur.
Furthermore, since the mold is utilized as the outer layer 1 of the molded article, the operations of removing the mold and washing the mold become unnecessary. Still further, since the core 2 is integrally formed in the outer layer 1, the preparation can be facilitated and the manufacturing cost can be reduced.

According to the preparation process of the present invention, since a fibrous material can be easily arranged in the outer layer 1, the core 2 can be easily reinforced. Moreover, since the starting reaction liquid containing the norbornene monomer has a relatively low viscosity, the reaction liquid permeates into fibers very easily and foams are not formed in the core 2. Accordingly, the obtained core 2 is rigid and has high strength.

The present invention is not limited to the foregoing embodiments but various modifications can be made.

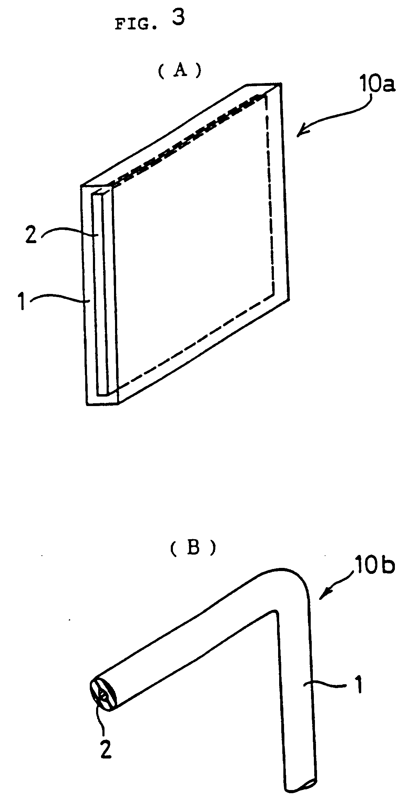

For example, as shown in Fig. 3(A), the outer layer 1 is shaped to have a hollow plate-like form and the core 2 is formed in the interior thereof, whereby RIM article 10a is constructed. Also, this molded article 10a can be prepared according to the same process as described above and the molded article 10a can exert the same fundamental functions as already described.

The molded article formed to have a plate-like shape as described above can be used as a plate-like construction member. Where the outer layer 1 is composed of a flexible material, the plate-like molded article can be used as a sound barrier or a sound insulating wall.

Moreover, according to another embodiment of the present invention, as shown in Fig. 3(B), the outer layer 1 is L-shaped and the core 2 is within the outer layer 1, whereby a RIM article 10b is constructed. This type of a molded article 10b can be prepared by the process described with reference to the above-mentioned embodiment, and has substantially the same characteristics.

A conventional L-shape structure is prepared by joining two rods, and thus, is difficult to prepare and has poor mechanical strength. In contrast, the above-mentioned L-shaped RIM article can easily be prepared, has good physical properties, and thus, is expected to be used as various structural elements.

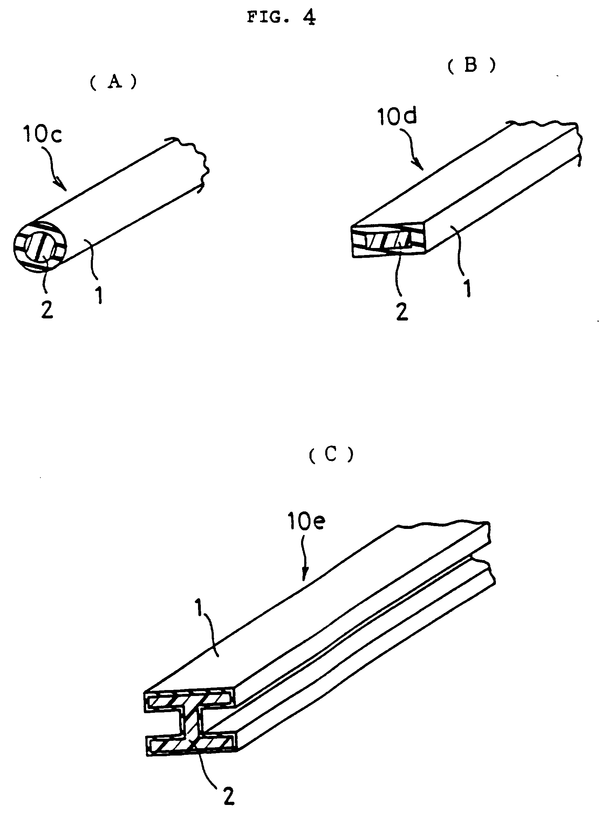

As illustrated in Fig. 4, each outer layer 1 of RIM articles 10c, 10d and 10e is formed of a flexible polymeric material, such as rubber, and the cross-sections of the molded articles 10c, 10d and 10e have a circular shape shown in Fig. 4 (A), a rectangular shape shown in Fig. 4 (B) and an H-shape shown in Fig. 4 (C). These molded articles can be used as sealing materials for preventing leakage of a fluid between two members.

These RIM articles to be used as a sealing material can be prepared according to the same process as described above and can exert the same fundamental functions as described above.

In the RIM article 10c, 10d, or 10e to be used as a sealing material, since the hard core 2 is integrally formed in the interior of the sealing material and a predetermined shape is maintained in the sealing material, the sealing material is easy to handle and it does not protrude from a groove or clearance to which the sealing material is attached. In such an instance, complete sealing can be attained even in the case of a high-pressure fluid. Molded article 10c illustrated in Fig. 4 (C) is especially suitable as a sealing material for a window pane. Moreover, when this sealing material is prepared, it is not necessary to attach the outer layer 1 and core 2 in separate steps and the preparation can be facilitated.

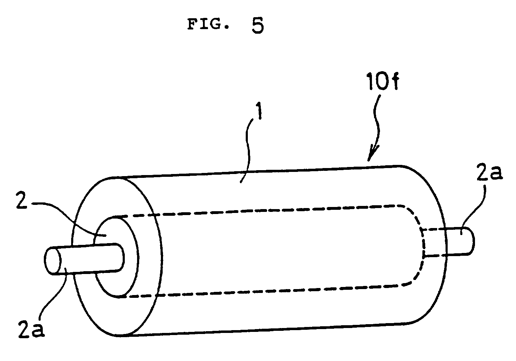

Still further, according to the present invention, both end portions of the rod-shaped injection molded article 10 shown in Fig. 1 can be machined to form rotation shafts 2a, 2a on both end portions of the core 2, as shown in Fig. 5, whereby a roller for various equipment is obtained.

As examples of rollers, there can be mentioned a platten roller, a paper feed roller, a paper pressing roller in papermaking equipment or the like, a driving roller, a supporting roller, a feed roller, and a guide roller in a conveyor or the like, a printing roller, a spinning roller, a papermaking roller, and an iron-manufacturing roller.

This roller 10f can be formed by machining the molded article to impart a predetermined shape. Roller 10f has the same fundamental functions as described above.

This machined product 10f having a shape of a roller is advantageous over a conventional roller having a metallic core in that the preparation process is simplified, the weight is reduced, and the manufacturing cost is decreased. Especially, since the core 2 is composed of the ring-opened polymer of the norbornene monomer, the machining operation can be performed easily and the processability is much better than in the case of a metallic core.

In the case where this machined product 10f as a roller is used as a platten roller of a precision machine, the outer surface of the outer layer 1 must be polished.

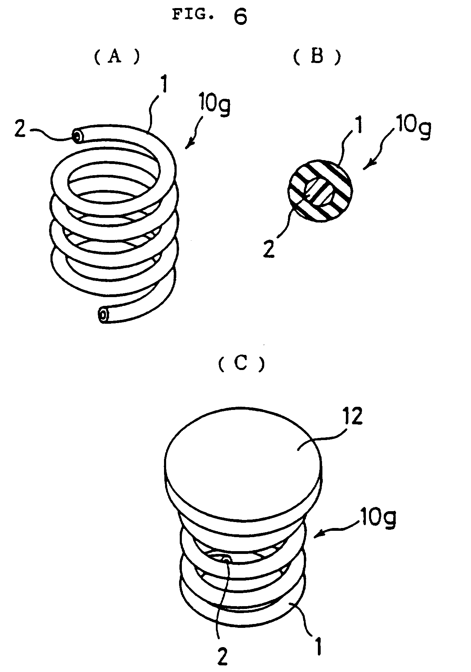

Furthermore, according to the present invention, the starting reaction liquid containing the norbornene monomer may be subjected to ring-opening polymerization in the interior of the outer layer 1 having a spiral shape, as shown in Fig. 6 (A) and 6 (B).

The molded article 10g of Fig. 6 to be used as the spiral spring can be prepared according to the same process as described above. Namely, the outer layer is formed in a spiral shape in advance, or the starting reaction liquid is cast in the outer layer and the outer layer is formed in a spiral shape before the starting reaction liquid is cured. The thus-obtained molded article exerts the same fundamental functions as described above.

Where the molded article is thus formed into a spiral shape, by changing the composition of the ring-opened polymer constituting the core 2, the spring constant or spring coefficient of the spiral spring can be optionally set within a broad range of 0.1 to 1,000 kg/cm, preferably 1 to 100 kg/cm. For example, the elasticity characteristics of the ring-opened polymer of the norbornene monomer are generally located in a broad region intermediate between those of a metal and those of a rubber. By changing the monomer composition or amount of a filler incorporated in the core, the elastic characteristics can be changed over a broad range. Moreover, since the hysteresis loss of the ring-opened polymer of the norbornene monomer is small and the polymer is capable of expansion and contraction, the polymer is a preferable material as a spring. According to the present invention, a spiral spring of this polymer can be easily provided for the first time.

Furthermore, since the ring-opened polymer of the norbornene monomer is used as the core 2, the weight of the spiral spring is much lighter than that of a conventional metal spiral spring. Moreover, if a flexible polymeric material such as a rubber is used as the outer layer 1, the preparation is facilitated as compared with the conventional preparation process in which a metal rod is formed into a spiral shape. If the spring is compressed, the flexible outer layers 1 are brought into contact with each other and the noise is much less than in the conventional spiral spring in which metal wires are brought into contact with each other. Further, since the outer layer 1 per se acts as a rubber stopper or abutment necessary in the conventional spiral springs, the stopper or abutment need not be made and the number of parts can be reduced. Still further, damages by an external shock, for example by impingement of a scattered small stone, can be prevented with spiral springs of present invention.

In the present invention, where this spiral plate spring is compressed, if the compression exceeds the predetermined quantity, deformation of the core 2 does not occur but compression deformation of the outer layer 1 occurs, and the compression stress drastically rises. Thus, the spiral spring of the present invention shows peculiar spring characteristics.

The spiral shape molded article 10g can be fitted to the underside of a disk 12 as shown in Fig. 6-(C). The thus-constructed assembly can be used as a chair.

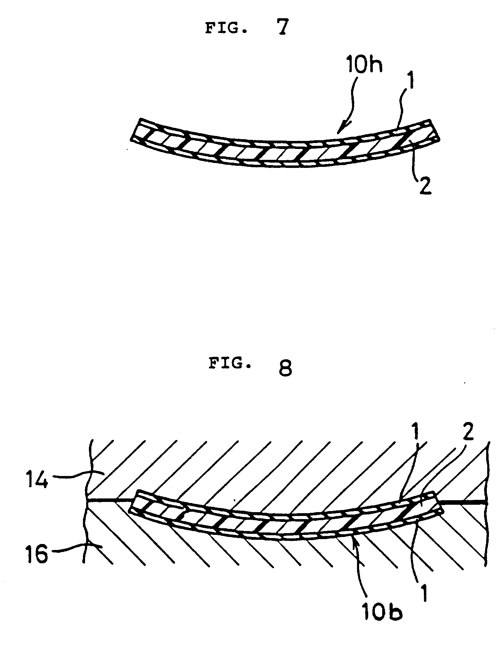

Still further, according to the present invention, the core 2 can be formed in the interior of a hollow curved outer layer 1, as shown in Fig. 7, and the obtained molded article 10h can be used as a plate or leaf spring.

The molded article 10h to be used as a plate spring can be prepared according to the same process as described above and the molded article exerts the same fundamental functions as described above.

Moreover, in this plate spring, since sliding contact between metal plates is not present, the noise is much less than in a conventional metal piled plate spring. Furthermore, since the outer layer 1 is integrally formed, a rubber stopper or abutment is not necessary and the impact resistance is improved.

The plate spring 10h can be molded in a conventional manner as shown in Fig. 8. Namely, outer layers 1, 1 are attached to the inner walls of molds 14, 16, defining the cavity, and a reaction liquid is cast into the space between the outer layers, where the reaction liquid is subjected to reaction injection molding.

### SPECIFIC EXAMPLES

The present invention will now be described in detail with reference to the following examples and comparative examples. The scope of the invention is not limited by these examples. In the examples, all of "parts" and "%" are by weight unless otherwise indicated.

### Example 1

The inner surface of a pipe (inner diameter = 27 mm, outer diameter = 37 mm, length = 40 cm) of a cross-linked rubber having a hardness of 90, which was formed from an ethylene/propylene rubber (Mitsui EPT 4070 supplied by Mitsui Petrochem. Ind.), was sufficiently washed with acetone and dried with nitrogen gas, and the pipe was used as the outer layer 1, see Fig. 2. A rubber plug 14 provided with a three-way valve 12 was fitted to one end, see Fig. 2, of pipe 1 and plug 14 was secured by clamping the rubber pipe by screw band 15. A rubber plug 13 provided with a two-way valve 11 was fitted at the other end of rubber pipe 1 and similarly affixed.

One opening of the three-way valve was connected to nitrogen line 17 and another opening was connected to a reaction injection casting machine.

Air in the rubber hose 1 was replaced by nitrogen gas and the rubber pipe was heated at about 70°C. A starting reaction liquid prepared in advance was cast from still another opening of the three-way valve to fill the starting reaction liquid in the pipe. The two-way valve was closed and the starting reaction liquid was further cast to expand the rubber pipe and increase the inner volume of the rubber pipe by at least about 2% by volume.

In 3 to 4 minutes, heat was generated and curing started, and in 4 to 5 minutes, polymerization was completed and the reaction liquid was cured.

The shrinkage caused by curing of the starting reaction liquid was compensated by shrinkage of the expanded rubber with the result that no vacant space was formed between the formed core and the rubber pipe.

The starting reaction liquid was 1/1 mixture of the following liquids A and B comprising, as the monomer component, a mixture of 70% of dicyclopentadiene and 30% of a trimer of cyclopentadiene . (The trimer was a mixture of 80% of the asymmetrical trimer and about 20% of the symmetrical trimer.

### Liquid A:

Monomer, phenol type antioxidant (Irganox® 259 supplied by Ciba-Geigy) (2%), diethylaluminum chloride (40 mM concentration) and silicon tetrachloride (20 mM concentration).

### Liquid B:

Monomer and tri(tridecyl) ammonium molybdate (10 mM concentration).

Then, the rubber plugs and screw bands were removed and the outer layer and core layer were machined under machining conditions given in Table 1 of Reference Example 1, given hereinafter, to obtain a rubber-covered roller having relative dimensions shown in Fig. 5. Machining was performed very easily and the dimension precision of each of the shaft portions on both sides was very high.

### Example 2

The starting reaction liquid was cast in the hollow portion of the outer layer in the same manner as described in Example 1 except that an extruded pipe (outer diameter = 24 mm, thickness = 1.5 mm) of polyethylene (Sumikathene® F101-1 supplied by Sumitomo Chem.) was used as the outer layer and the operation of expanding the pipe was omitted. The reaction liquid was completely polymerized, and the polyethylene of the outer layer was bonded to the core with an unpeelable strength, i.e., fracture of the polyethylene layer. A roller was obtained by performing the machining operation in the same manner as described in Example 1. Machining was as easy as in Example 1 and the dimension precision of each of the shaft portions on both ends was very high.

### Example 3

The procedure of Example 1 was repeated in the same manner except that a pipe of a crosslinked rubber having a hardness of 96, which was formed from an acrylonitrile/butadiene rubber (Nipol® 1042 supplied by Nippon Zeon), was used as the outer layer 1 and an adhesive layer was formed on the inner surface of the pipe, before supplying the starting reaction liquid, by coating a thermosetting phenol type adhesive (Metalock® PA supplied by Toyo Kagaku), drying the coated surface by nitrogen gas, and conducting heat-setting in an oven maintained at 180°C for 10 minutes. The results were similar to those obtained in Example 1.

### Example 4

The starting reaction liquid was cast in the same manner as described in Example 3 except that a hose (inner diameter = 12 mm, outer diameter = 15 mm, length = 1.5 mm) of a crosslinked rubber having a hardness of 60, which was formed from an acrylonitrile/butadiene rubber (Nipol® 1042), was used.

Before curing of the starting reaction liquid, the hose filled with the core material was spirally wound and fixed around the outer wall of a cylinder having an outer diameter of 6 cm. In 3 to 4 minutes, heat was generated and polymerization started, and in 4 to 5 minutes, the polymerization was completed. When the polymerization product was removed from the cylinder, a spiral spring, shown in Fig. 6, was obtained. The upper and lower ends of the spring were horizontally cut and the spring contact was measured at a compression speed of 2 mm/min by a compression tester provided with a pressure sensor. It was found that the spring constant was 4.6 kg/cm for the spring which had coil diameter of 7.5 cm, material diameter of 1.5 cm, and pitch of 5 cm.

### Example 5

Molding was carried out in the same manner as described in Example 4 except that filaments of a glass fiber (Roving ER 2310 supplied by Nippon Denki Glass) was filled in an amount of 50% by weight in the hollow portion of the rubber hose by introducing the filaments into the hose from one end and pulling the filaments from the other end. The spring constant of the resulting spring was 15.0 kg/cm.

### Example 6

Molding was carried out in the same manner as described in Example 4 except that dicyclopentadiene was used as the monomer of the starting reaction liquid. The spring constant of the obtained spring was 3.2 kg/cm.

### Reference Example 1

A sample (glass transition temperature Tg = 189° C) having a rod shape having an outer diameter of 27 mm was prepared by using the same starting reaction liquid as used in Example 1, and the sample was machined into a rod and the machined product was compared with a rod of stainless steel SUS 304 as Comparative Example 1.

A lathe was operated under conditions described below and the surface roughness was determined (R_{z} stands for the average surface roughness and Rₘₐₓ stands for the maximum surface roughness). The results are shown in Table 1 and 2.

**Table 1**

| | Surface Roughness | |
|---|---|---|
| | R_{z} | Rₘₐₓ |
| Comparative Example 1 | 11.5µm | 18.0µm |
| Reference Example 1 | 11.2µm | 16.2µm |

The lathe conditions were as follows:

| Lathe Conditions | |
|---|---|
| Pitch | 5.7/100 |
| Rotation Number | 1000 rpm |
| Machining Thickness | 1 mm |
| Machining Oil | Emulsion type machining oil for Reference Example 1 |
| | Ordinary machining oil for Comparative Example 1 |

**Table 2**

| | Surface Roughness | |
|---|---|---|
| | R_{z} | Rₘₐₓ |
| Comparative Example 1 | machining was impossible because of too high a load | |
| Reference Example 1 | 12.5µm | 16.2µm |

The lathe conditions were as follows:

| Lathe Conditions | |
|---|---|
| Pitch | 5.7/100 |
| Rotation Number | 750 rpm |
| Machining Thickness | 4 mm |
| Machining Oil | Plastic emulsion type machining oil for Reference Example 1 |
| | Ordinary machining oil for Comparative Example 1 |

The samples of Reference Example 1 and Comparative Example 1 were pierced by a lathe, and the results are shown in Table 3.

**Table 3**

| | Diameter just after Piercing | Diameter after 1 hour |
|---|---|---|
| Comparative Example 1 | 16 mm ± 0.02 | 16 mm ± 0.02 |
| Reference Example 1 | 16 mm ± 0.02 | 16 mm ± 0.02 |

The lathe conditions were as shown below:

| Lathe Conditions | |
|---|---|
| Drill Diameter | 16 mm |
| Rotation Number | 250 rpm |
| Depth | 50 mm |
| Machining Oil | Emulsion type machining oil for Reference Example 1 |
| | Ordinary machining oil for Comparative Example 1 |

As is shown in Tables 1 through 3, it was found that a ring-opened polymer of a norbornene monomer having a tricyclic or higher cyclic structure can be machined at a precision comparable to the precision attainable at machining of stainless steel and the machinability of the polymer is good.

### Example 7

The starting reaction liquid was cast in the hollow portion of the outer layer in the same manner as described in Example 1 except that an extruded pipe (outer diameter = 30 mm, inner diameter = 22 mm, Shore A hardness = 85) of partially cross-linked thermoplastic olefin elastomer (Mirastomer® 8030N, supplied by Mitsui Petrochem. Ind.) was used as the outer layer. The reaction liquid was completely polymerized and the thermoplastic elastomer of the outer layer was bonded to the core. The tensile peeling strength was tested and it was found that fracture did not occur in the bonded portion but occurred in the thermoplastic elastomer layer, and thus, the bonding was firm.

### Example 8

The starting reaction liquid was cast in the hollow portion of the outer layer in the same manner as described in Example 7 except that an extruded pipe (outer diameter = 30 mm, inner diameter = 22 mm, Shore A hardness = 36) of a thermoplastic elastomer (Quintac® 3421 supplied by Nippon Zeon) of a styrene-isoprene-styrene block copolymer was used as the outer layer. The reaction liquid was completely polymerized, and the thermoplastic elastomer of the outer layer was bonded to the core. The tensile peeling strength was tested and it was found that fracture did not occur in the bonded portion but occurred in the thermoplastic elastomer layer, and thus, the bonding was firm.

In the molded article or machined product according to the present invention, since the core is covered with the outer layer composed of a polymeric material, the peculiar smell of the norbornene-type polymer is drastically reduced.

Where the outer layer is formed into a spiral shape, by changing the material and thickness of the outer layer and the composition and amount of the ring-opened polymer constituting the core, the spring constant of the spiral spring can be easily adjusted within a broad range. The weight of this spiral spring is much lighter than that of a conventional metal spiral spring. Furthermore, since a polymeric material is used as the outer layer, the preparation is much facilitated as compared with the conventional preparation process in which a metal rod is formed into a spiral shape. If the spiral spring of this invention is compressed, the outer layers composed of the polymeric material are brought into contact with each other with the result that the noise is much less than in the conventional spiral spring in which metal wires are brought into contact with each other. Also, where the outer layer is composed of a flexible polymeric material, the outer layer per se acts as a rubber necessary in the conventional spiral spring and the stopper need not be disposed, thus the number of parts can be reduced.

Moreover, according to the present invention, where the outer layer is formed from a flexible polymeric material such as rubber, a circular, rectangular or another shape is imparted to the section of the molded article and the molded article is used as a sealing material for preventing leakage or entry of a fluid between two members. In this case, since a hard core composed of the ring-opened polymer is formed in the sealing material beforehand, the sealing material can retain a predetermined shape and sealing material does not protrude from a groove or clearance in which the sealing material is disposed. Accordingly, a more complete sealing is attained even in the case of a high-pressure fluid. Moreover, in preparing this sealing material, since the outer layer and core need not be adhered in an additional step, the sealing material can be prepared very easily.

Still further, according to the present invention, both ends of the rod-shaped molded article can be machined to form rotation shafts on both end portions of the core and the machined product can be used as a roller for various equipment.

Since the ring-opened polymer of the norbornene monomer having a tricyclic or higher cyclic structure has very good machinability, rotation shafts can be formed with precision comparable to that attained in conventional rollers having a metallic core. Also, the present invention is advantageous over the conventional process using a metallic core in that the preparation is facilitated and the weight and manufacturing cost can be reduced.

According to the preparation process of the present invention, since the outer layer is used as the mold and is positively utilized as a constituent element of the molded article, even a complicated shape of high precision can be easily obtained at a low cost. If the starting reaction liquid is supplied in the state where the outer layer is expanded to a predetermined extent allowing for shrinkage by the polymerization reaction, no vacant space is formed between the outer layer and the core. Moreover, since the polymeric material is used as the mold, corrosion or contamination of the mold observed in the conventional process does not occur and the operation of removing or washing the mold is not necessary.

Furthermore, according to the preparation process of the present invention, since a fibrous reinforcing material can be easily arranged in the inner layer, the core is thus reinforced easily. Further, since the starting reaction liquid containing the norbornene monomer has a relatively low viscosity, the starting reaction liquid easily penetrates among arranged fibers and foams are not formed in the core. Accordingly, the strength of the core is highly improved.

## Claims

1. An integrally molded polymeric article comprising a polymeric core which is covered by a polymeric outer layer wherein said polymeric core comprises a ring-opened polymer derived from the metathesis bulk polymerization of a norbornene monomer having a tricyclic or higher cyclic structure and wherein said norbornene monomer is polymerized within and in contact with the inner surface of said outer layer polymer and said outer layer polymer is different from the core polymer and is selected from crosslinked polymers of elastomers, thermoplastic elastomers, thermoplastic resins, thermosetting resins, and mixtures thereof.

2. Article of claim 1 wherein said crosslinked polymers of elastomers are selected from natural rubbers, polybutadienne rubbers, styrene/butadiene rubbers, acrylonitrile, butadiene rubbers, hydrogenated acrylonitrile/butadiene rubbers, chloroprene rubbers, ethylene/propylene rubbers, ethylene/butene-1 rubbers, ethylene/propylene/diene terpolymer rubbers, acrylic rubbers, epichlorohydrin rubbers, chlorosulfonated polyethylenes, and mixtures thereof; said thermoplastic elastomers are selected from styrene/butadiene block copolymers, styrene/isoprene block copolymers, styrene/isoprene/styrene block copolymers, styrene/isoprene/styrene/isoprene/styrene block copolymers, hydrogenated products of such block copolymers, mixtures of partially crosslinked ethylene/propylene rubbers and polyethylene, mixtures of partially crosslinked ethylene/propylene rubbers or ethylene/propylene/diene terpolymer rubbers and polyethylenes or polypropylenes, and mixtures thereof; said thermoplastic resins are selected from polyethylenes, polypropylenes, polyvinyl chloride, polystyrenes, ABS resins, ethylene/vinyl acetate copolymers, polyurethanes, chlorinated polyethylenes, crosslinked polyethylenes, polyethylene terephthalates, nylon 6, and mixtures thereof; said thermosetting resins are selected from epoxy resins, phenolic resins, urea resins, silicone resins, and mixtures thereof; and mixtures of said crosslinked polymers of elastomers, thermoplastic elastomers, thermoplastic resins, and thermosetting resins.

3. Article of claim 1 or 2 wherein said polymeric core comprises
polymers of dicyclopentadiene,
dihydrodicyclopentadiene, tetracyclic monomers,
pentacyclic monomers, hexacyclic monomers,
heptacyclic monomers, and mixtures thereof.

4. Article of claim 2 wherein said core comprises polymers of dicyclopentadiene and trimers of cyclopentadiene.

5. Article of claim 2 wherein said thermosetting resin in said core comprise ring-opened polymers of C₁₋₁₂ alkyl substituted norbornene monomers; C₂₋₄ alkylidene substituted monomers; C₆₋₁₆ aryl substituted norbornene monomers; substituted monomers having polar groups selected from ester, nitrile, ether, halogen, and mixtures thereof; and mixtures of substituted and/or unsubstituted norbornene monomers.

6. . Article of claim 5 including an adhesive between said outer layer and said core.

7. Article of claim 6 wherein said adhesive is a thermosetting polymer.

8. Article of claim 3 in the form of a spiral spring.

9. Article of claim 8 wherein said core has heat resistance in excess of 150°C and its spring constant is 0.1 to 1,000 kg/cm.

10. Article of claim 1 wherein said core contains reinforcement material to improve mechanical strength thereof.

11. A process for preparing the integrally molded polymeric article as defined in anyone of claims 1 to 10 comprising a polymeric core covered by a polymeric outer layer comprising the steps of: providing a mold comprising said polymeric outer layer; conveying a reaction solution comprising a norbornene monomer having a tricyclic or higher cyclic structure, a metathesis catalyst, and a metathesis cocatalyst into said mold; and polymerizing said norbornene monomer in contact with the inner surface of said mold.

12. Process of claim 11 which includes the step of providing an adhesive on the inside of said outer layer before introduction of said norbornene monomer.

13. Process of claim 11 wherein said outer layer comprises crosslinked polymers of elastomers, thermoplastic elastomers, thermoplastic resins, thermosetting resins, and mixtures thereof core and wherein said core is enclosed and comprises thermosetting resins, and mixtures thereof.

14. Process of claim 13 wherein said crosslinked polymers of elastomers are selected from natural rubbers, polybutadiene rubbers, styrene/butadiene rubbers, acrylonitrile/butadiene rubbers, hydrogenated acrylonitrile/butadiene rubbers, chloroprene rubbers, ethylene/propylene rubbers, ethylene/butene-1 rubbers, ethylene/propylene/diene terpolymer rubbers, acrylic rubbers, epichlorohydrin rubbers, chlorosulfonated polyethylenes, and mixtures thereof; said thermoplastic elastomers are selected from styrene/butadiene block copolymers, styrene/isoprene block copolymers, styrene/isoprene/styrene block copolymers, styrene/isoprene/styrene/isoprene/styrene block copolymers, hydrogenated products of such block copolymers, mixtures of partially crosslinked ethylene/propylene rubbers, ethylene/propylene/diene terpolymer rubbers, polyethylenes and polypropylenes, and mixtures thereof; said thermoplastic resins are selected from polyethylenes, polypropylenes, polyvinyl chloride, polystyrenes, ABS resins, ethylene/vinyl acetate copolymers, polyurethanes, chlorinated polyethylenes, crosslinked polyethylenes, polyethylene terephthalates, nylon 6, and mixtures thereof; said thermosetting resins are selected from epoxy resins, phenolic resins, urea resins, silicone resins, and mixtures thereof; and mixtures of said crosslinked polymers of elastomers, thermoplastic resins, and thermosetting resins.

15. Process of claim 13 wherein said thermosetting resins in said core comprise
polymers of dicyclopentadiene,
dihydrodicyclopentadiene, tetracyclic monomers,
pentacyclic monomers, hexacyclic monomers,
heptacyclic monomers, and mixtures thereof.

16. Process of claim 13 wherein said thermosetting resins in said core also include ring-opened polymers of C₁₋₁₂ alkyl substituted norbornene monomers; C₂₋₄ alkylidene substituted norbornene monomers; C₆₋₁₆ aryl substituted norbornene monomers; substituted norbornene monomers having polar groups selected from ester, nitrile, ether, halogen, and mixtures thereof; and mixtures of substituted and/or unsubstituted norbornene monomers.

17. Process of claim 11 wherein the ring-opened polymer in said core has heat distortion temperature in excess of 150°C.

18. Process of claim 13 wherein said core comprises polymers of dicyclopentadiene and trimers of cyclopentadiene.

## Patentansprüche

1. Integral formgepreßter polymerer Gegenstand, der einen polymeren Kern umfaßt, der von einer polymeren Außenschicht bedeckt ist, wobei der polymere Kern ein ringgeöffnetes Polymer umfaßt, das von der Metathesepolymerisation in Masse eines Norbornenmonomers mit tricyclischer oder höher cyclischer Struktur abgeleitet ist, und wobei das Norbornenmonomer innerhalb und in Kontakt mit der Innenfläche des Außenschichtpolymers polymerisiert ist und das Außenschichtpolymer von dem Kernpolymer verschieden und aus vernetzten Polymeren von Elastomeren, thermoplastischen Elastomeren, thermoplastischen Harzen, duroplastischen Harzen und Gemischen davon ausgewählt ist.

2. Gegenstand gemäß Anspruch 1, wobei die vernetzten Polymere von Elastomeren aus natürlichen Kautschuken, Polybutadienkautschuken, Styrol/Butadien-KautBchuken, Acrylnitril/Butadien-Kautschuken, hydriertenAcrylnitril/Butadien-Kautschuken, Chloroprenkautschuken, Ethylen/Propylen-Kautschuken, Ethylen/Buten-1-Kautschuken,Ethylen/Propylen/Dien-Terpolymerkautschuken, Acrylkautschuken, Epichlorhydrinkautschuken, chlorsulfonierten Polyethylenen und Gemischen davon ausgewählt sind, die thermoplastischen Elastomere aus Styrol/Butadien-Blockcopolymeren, Styrol/Isopren-Blockcopolymeren, Styrol/Isopren/Styrol-Blockcopolymeren, Styrol/Isopren/Styrol/Isopren/Styrol-Blockcopolymeren, hydrierten Produkten solcher Blockcopolymere, Gemischen von partiell vernetzten Ethylen/Propylen-Kautschuken und Polyethylen, Gemischen von partiell vernetzten Ethylen/ Propylen-Kautschuken oder Ethylen/Propylen/Dien-Terpolymerkautschuken und Polyethylenen oder Polypropylenen und Gemischen davon ausgewählt sind, die thermoplastischen Harze aus Polyethylenen, Polypropylenen, Polyvinylchlorid, Polystyrolen, ABS-Harzen, Ethylen/Vinylacetat-Copolymeren, Polyurethanen, chlorierten Polyethylenen, vernetzten Polyethylenen, Polyethylenterephthalaten, Nylon 6 und Gemischen davon ausgewählt sind, die duroplastischen Harze aus Epoxyharzen, Phenolharzen, Harnstoffharzen, Silikonharzen und Gemischen davon ausgewählt sind; sowie Gemische dieser vernetzten Polymere von Elastomeren, thermoplastischen Elastomere, thermoplastischen Harze und duroplastischen Harze.

3. Gegenstand gemäß Anspruch 1 oder 2, wobei der polymere Kern Polymere von Dicyclopentadien, Dihydrodicyclopentadien, tetracyclischen Monomeren, pentacyclischen Monomeren, hexacyclischen Monomeren, heptacyclischen Monomeren und Gemischen davon umfaßt.

4. Gegenstand gemäß Anspruch 2, wobei der Kern Polymere von Dicyclopentadien und Trimeren von Cyclopentadien umfaßt.

5. Gegenstand gemäß Anspruch 2, wobei das duroplastische Harz in dem Kern ringgeöffnete Polymere von C₁₋₁₂-alkylsubstituierten Norbornenmonomeren, C₂₋₄-alkylidensubstituierten Norbornenmonomeren, C₆₋₁₆-arylsubstituierten Norbornenmonomeren, substituierten Monomeren mit polaren Gruppen, die aus Ester, Nitril, Ether, Halogen und Gemischen davon ausgewählt sind, sowie Gemischen von substituierten und/oder unsubstituierten Norbornenmonomeren umfaßt.

6. Gegenstand gemäß Anspruch 5, der einen Klebstoff zwischen der Außenschicht und dem Kern enthält.

7. Gegenstand gemäß Anspruch 6, wobei der Klebstoff ein duroplastisches Polymer ist.

8. Gegenstand gemäß Anspruch 3 in Form einer Spiralfeder.

9. Gegenstand gemäß Anspruch 8, wobei der Kern eine Wärmebeständigkeit von über 150°C hat und seine Federkonstante 0,1 bis 1000 kg/cm beträgt.

10. Gegenstand gemäß Anspruch 1, wobei der Kern Verstärkungsmaterial zur Verbesserung der mechanischen Festigkeit enthält.

11. Verfahren zur Herstellung des in einem der Ansprüche 1 bis 10 definierten integral formgepreßten polymeren Gegenstands, der einen polymeren Kern umfaßt, der von einer polymeren Außenschicht bedeckt ist, umfassend die Schritte: Bereitstellen einer Form, die die polymere Außenschicht umfaßt; Einspeisen einer Reaktionslösung, die ein Norbornenmonomer mit tricyclischer oder höher cyclischer Struktur, einen Metathesekatalysator und einen Metathesecokatalysator umfaßt, in die Form und Polymerisieren des Norbornenmonomers in Kontakt mit der Innenfläche der Form.

12. Verfahren gemäß Anspruch 11, das den Schritt des Bereitstellens eines Klebstoffs auf der Innenseite der Außenschicht vor der Einführung des Norbornenmonomers umfaßt.

13. Verfahren gemäß Anspruch 11, wobei die Außenschicht vernetzte Polymere von Elastomeren, thermoplastische Elastomere, thermoplastische Harze, duroplastische Harze und Gemische davon umfaßt und wobei der Kern eingeschlossen wird und duroplastische Harze und Gemische davon umfaßt.

14. Verfahren gemäß Anspruch 13, wobei die vernetzten Polymere von Elastomeren aus natürlichen Kautschuken, Polybutadienkautschuken, Styrol/Butadien-Kautschuken, Acrylnitril/Butadien-Kautschuken, hydriertenAcrylnitril/Butadien-Kautschuken, Chloroprenkautschuken, Ethylen/Propylen-Kautschuken, Ethylen/Buten-1-Kautschuken,Ethylen/Propylen/Dien-Terpolymerkautschuken, Acrylkautschuken, Epichlorhydrinkautschuken, chlorsulfonierten Polyethylenen und Gemischen davon ausgewählt sind, die thermoplastischen Elastomere aus Styrol/Butadien-Blockcopolymeren, Styrol/Isopren-Blockcopolymeren, Styrol/Isopren/Styrol-Blockcopolymeren, Styrol/isopren/Styrol/Isopren/Styrol-Blockcopolymeren, hydrierten Produkten solcher Blockcopolymere, Gemischen von partiell vernetzten Ethylen/Propylen-Kautschuken, Ethylen/ Propylen/Dien-Terpolymerkautschuken, Polyethylenen und Polypropylenen und Gemischen davon ausgewählt sind, die thermoplastischen Harze aus Polyethylenen, Polypropylenen, Polyvinylchlorid, Polystyrolen, ABS-Harzen, Ethylen/Vinylacetat-Copolymeren, Polyurethanen, chlorierten Polyethylenen, vernetzten Polyethylenen, Polyethylenterephthalaten, Nylon 6 und Gemischen davon ausgewählt sind, die duroplastischen Harze aus Epoxyharzen, Phenolharzen, Harnstoffharzen, Silikonharzen und Gemischen davon ausgewählt sind; sowie Gemische dieser vernetzten Polymere von Elastomeren, thermoplastischen Elastomere, thermoplastischen Harze und duroplastischen Harze.

15. Verfahren gemäß Anspruch 13, wobei die duroplastischen Harze in dem Kern Polymere von Dicyclopentadien, Dihydrodicyclopentadien, tetracyclischen Monomeren, pentacyclischen Monomeren, hexacyclischen Monomeren, heptacyclischen Monomeren und Gemischen davon umfassen.

16. Verfahren gemäß Anspruch 13, wobei die duroplastischen Harze in dem Kern außerdem ringgeöffnete Polymere von C₁₋₁₂-alkylsubstituierten Norbornenmonomeren, C₂₋₄-alkylidensubstituierten Norbornenmonomeren, C₆₋₁₆-arylsubstituierten Norbornenmonomeren, substituierten Norbornenmonomeren mit polaren Gruppen, die aus Ester, Nitril, Ether, Halogen und Gemischen davon ausgewählt sind, sowie Gemischen von substituierten und/oder unsubstituierten Norbornenmonomeren umfaßt.

17. Verfahren gemäß Anspruch 11, wobei das ringgeöffnete Polymer in dem Kern eine Wärmestandfestigkeit von 150°C hat.

18. Verfahren gemäß Anspruch 13, wobei der Kern Polymere von Dicyclopentadien und Trimeren von Cyclopentadien umfaßt.

## Revendications

1. Un article polymère moulé intégralement comprenant un noyau polymère qui est recouvert par une couche externe polymère où ledit noyau polymère comprend un polymère à ouverture de cycle dérivé de la polymérisation en masse à métathèse d'un monomère de norbornéne ayant une structure tricyclique ou une structure cyclique supérieure et où ledit monomère de norbornène est polymérisé dans et en contact avec la surface interne dudit polymère à couche externe et ledit polymère à couche externe est différent du polymère du noyau et est choisi à partir de polymères réticulés d'élastoméres, d'élastoméres thermoplastiques, de résines thermoplastiques, de résines thermodurcissables et leurs mélanges.

2. Article selon la revendication 1, dans lequel lesdits polymères réticulés des élastomères sont choisis parmi les caoutchoucs naturels, les caoutchoucs de polybutadiène, les caoutchoucs de styrène/butadiène, les caoutchoucs d'acrylonitrile-butadiéne, les caoutchoucs d'acrylonitrile hydrogéné/butadiène, les caoutchoucs de chloroprène, les caoutchoucs d'éthylène/propylène, les caoutchoucs d'éthylène/butène-1, les caoutchoucs de terpolymère éthylène/propylène/diène, les caoutchoucs acryliques, les caoutchoucs d'épichlorhydrine, les polyéthylènes chlorosulfonés et leurs mélanges; lesdits élastomères thermoplastiques sont choisis parmi les copolymères séquencés de styrène/butadiène, les copolymères séquencés de styrène/isoprène, les copolymères séquencés de styrène/isoprène/styrène, les copolymères séquencés de styréne/isoprène/styrène/isoprène/styrène, les produits hydrogénés de ces copolymères séquencés, les mélanges de caoutchoucs d'éthylène/propylène partiellement réticulés et de polyéthylène, les mélanges de caoutchoucs d'éthylène/propylène partiellement réticulés ou les caoutchoucs de terpolymère éthylène/propylène/diène et les polyéthylènes ou les polypropylènes et leurs mélanges; ces résines thermoplastiques sont choisies parmi les polyéthylènes, les polypropylènes, le chlorure de polyvinyle, les polystyrènes, les résines ABS, les copolymères d'acétate de vinyle/éthylène, les polyuréthanes, les polyéthylènes, chlorés, les polyéthylènes réticulés, les téréphralates de polyéthylène, le nylon 6 et leurs mélanges; lesdites résines thermoplastiques sont choisies parmi les résines époxy, les résines phénoliques, les résines urée, les résines de silicone et leurs mélanges; et les mélanges desdits polymères réticulés d'élastomères, d'élastomères thermooplastiques, de résines thermoplastiques et de résines thermodurcissables.

3. Article selon la revendication 1 ou 2, dans lequel ledit noyau polymère comprend des polymères de dicyclopentadiène, de dihydrodicyclopentadiène, des monomères tétracycliques, des monomères pentacycliques, des monomères hexacycliques, des monomères heptacycliques et leurs mélanges.

4. Article selon la rcvendication 2, dans lequel ledit noyau comprend des polymères de dicyclopentadiène et des trimères de cyclopentadiène.

5. Article selon la revendication 2, dans lequel ladite résine thermodurcissable dans ledit noyau comprend des polymères à ouverture de cycle de monomères de norbornène à substitution alkyle en C₁-C₁₂; de monomères à substitution alkylidène en C₂-C₄, de monomères de norbornène à substitution aryle en C₆-C₁₆, de monomères substitués ayant des groupes polaires choisis parmi les groupes ester, nitrile, éther, halogène et leurs mélanges et de mélanges de monomères de norbornène substitués et/ou non-substitués.

6. Article selon la revendication 5, comprenant un adhésif entre ladite couche externe et ledit noyau.

7. Article selon la revendication 6, dans lequel ledit adhésif est un polymère thermodurcissable.

8. Article selon la revendication 3, sous la forme d'un ressort à spirale.

9. Article selon la revendication 8, dans lequel ledit noyau a une résistance à la chaleur supérieure à 150°C et sa constante d'élasticité est de 0,1 à 1 000 kg/cm.

10. Article selon la revendication 1, dans lequel ledit noyau renferme un matériau de renforcement pour améliorer sa résistance mécanique.

11. Un procédé pour préparer l'article polymère moulé intégralement selon l'une quelconque des revendications 1 à 10 comprenant un noyau polymère recouvert par une couche externe polymère comprenant les étapes consistant à prévoir un moule comprenant ladite couche externe polymère, à acheminer une solution de réaction comprenant un monomère de norbornène ayant une structure tricyclique ou une structure cyclique supérieure, un catalyseur de métathèse et un cocatalyseur de métathèse dans ledit moule et à polymériser ledit monomère de norbornène en contact avec la surface interne dudit moule.

12. Procédé selon la revendication 11, qui comprend l'étape consistant à prévoir un adhésif sur l'intérieur de ladite couche externe avant l'introduction dudit monomère de norbornène.

13. Procédé selon la revendication 11, dans lequel ladite couche externe comprend des polymères réticulés d'élastomères, d'élastomères thermoplastiques, de résines thermoplastiques, de résines thermodurcissables et leurs mélanges et dans lequel ledit noyau est entouré et comprend des résines thermodurcissables et leurs mélanges.

14. Procédé selon la revendication 13, dans lequel lesdits polymères réticulés, d'élastomères sont choisis parmi les caoutchoucs naturels, les caoutchoucs de polybutadiène; les caoutchoucs de styréne/butadiène, les caoutchoucs d'acrylonitrile/butadiène, les caoutchoucs d'acrylonitrile hydrogéné/butadiène, les caoutchoucs de chloroprène, les caoutchoucs d'éthylène/propylène, les caoutchoucs d'éthylène/butène-1, les caoutchoucs de terpolymère éthylène/propylène/diène, les caoutchoucs acryliques, les caoutchoucs d'épichlorhydrine, les polyéthylènes chlorosulfonés et leurs mélanges; lesdits élastomères thermoplastiques sont choisis parmi les copolymères séquencés de styrène/butadiène, les copolymères séquencés de styrène/isoprène, les copolymères séquencés de styrène/isoprène/styrène, les copolymères séquencés de styrène/isoprène/styrène/isoprène/styrène, les produits hydrogénés de ces copolymères séquencés, les mélanges de caoutchoucs d'éthylène/propylène partiellement réticulés, les caoutchoucs de terpolymère éthylène/propylène/diène, les polyéthylènes et les polypropylènes et leurs mélanges; lesdites résines thermoplastiques sont choisies parmi les polyéthylènes, les polypropylènes, le chlorure de polyvinyle, les polystyrènes, les résines ABS, les copolymères éthylène/acétate de vinyle, les polyuréthanes, les polyéthylènes chlorés, les polyéthylènes réticulés, les téréphtalates de polyéthylène, le nylon 6 et leurs mélanges, lesdites résines thermodurcissables sont choisies parmi les résines époxy, les résines phénoliques, les résines urée, les résines de silicone et leurs mélanges; et les mélanges desdits polymères réticulés d'élastomères, de résines thermoplastiques et de résines thermodurcissables.

15. Procédé selon la revendication 13, dans lequel lesdites résinés thermodurcissables dans ledit noyau comprennent les polymères de dicyclopentadiène, de dihydrodicyclopentadiène, de monomères tétracycliques, de monomères pentatycliques, de monomères hexacycliques, de monomères heptacycliques et leurs mélanges.

16. Procédé selon la revendication 13, dans lequel lesdites résines thermodurcissables dans ledit noyau comprennent également les polymères à ouverture de cycle de monomères de norbornène à substitution alkyle en C₁₋₁₂; de monomères de norbornène à substitution alkylidène en C₂₋₄, de monomères de norbornène à substitution aryle en C₆₋₁₆, de monomères de norbornène substitués ayant des groupes polaires choisis parmi les groupes ester, nitrile, éther, halogène et leurs mélanges et de mélanges de monomères de norbornène substitués et/ou non substitués.

17. Procédé selon la revendication 11, dans lequel le polymère à ouverture de cycle dans ledit noyau a une température de déformation à la chaleur supérieure à 150°C.

18. Procédé selon la revendication 13, dans lequel ledit noyau comprend des polymères de dicyclopentadiène et des trimères de cyclopentadiène.
